# EUROPÄISCHE PATENTANMELDUNG

(11) **EP 3 480 231 A1**
(43) Veröffentlichungstag der Anmeldung: **08.05.2019**
(21) Anmeldenummer: 17199866.9
(22) Anmeldetag: 03.11.2017
(51) Int. Cl.: C08G 18/22, C08G 18/69, C08G 18/76, C08G 63/08, C08G 18/12, C08G 18/42, C09J 175/06

(54) **REAKTIVKLEBSTOFFE BASIEREND AUF BLOCK-COPOLYMEREN**

(71) Anmelder: Evonik Degussa GmbH, 45128 Essen (DE)
(72) Erfinder: KOLB, Nicolai, 45657 Recklinghausen (DE); BRENNER, Gabriele, 48249 Dülmen (DE); SCHLEIMER, Bernhard, 45770 Marl (DE)

(57) **Zusammenfassung**

Die vorliegende Erfindung betrifft eine Zusammensetzung enthaltend das Umsetzungsprodukt eines Block-Copolymers auf Basis von OH-funktionellem Polyolefin, welches auch anteilig oder vollständig hydriert vorliegen kann, vorzugsweise aber unhydriert ist, vorzugsweise Polybutadien und zyklischen Estern als Polyol, welches mindestens 1,8, vorzugsweise mindestens zwei OH-Gruppen aufweist, und mindestens einer Isocyanatverbindung, die mindestens zwei Isocyanatgruppen aufweist, welche sich dadurch auszeichnet, dass die Zusammensetzung mindestens 0,0001 bis 40 Gew.-% Titan aufweist und einen Gehalt an freien Isocyanatgruppen von mindestens 0,1 Gew.-% bezogen auf die Gesamtzusammensetzung aufweist, ein Verfahren zu deren Herstellung sowie die Verwendung der Zusammensetzung zum Verkleben von Substraten.

## Beschreibung

Die vorliegende Erfindung betrifft eine Zusammensetzung, enthaltend das Umsetzungsprodukt eines Block-Copolymers auf Basis von OH-funktionellem Polyolefin, welches auch anteilig oder vollständig hydriert vorliegen kann, vorzugsweise aber unhydriert ist, bevorzugt OH-funktionellem Polybutadien, und zyklischen Estern als Polyol, welches mindestens 1,8 OH-Gruppen aufweist, und mindestens einer Isocyanatverbindung, die mindestens zwei Isocyanatgruppen aufweist, welche sich dadurch auszeichnet, dass die Zusammensetzung 0,0001 bis 40 Gew.-% Titan aufweist und einen Gehalt an freien Isocyanatgruppen von mindestens 0,1 Gew.-%, bezogen auf die Gesamtzusammensetzung, aufweist, ein Verfahren zu deren Herstellung sowie die Verwendung der Zusammensetzung zur Herstellung von Kleb- und Dichtstoffen sowie die Verwendung dieser Kleb- und Dichtstoffe zum Verkleben von Substraten.

Polyester-Polyole werden heute vielfach als Rohstoffe genutzt, unter anderem zur Herstellung von Kleb- und Dichtstoffen. Diese Kleb- und Dichtstoffe können beispielsweise thermoplastische oder reaktive Schmelzklebstoffe, 1K- oder 2K- Flüssigklebstoffe, oder Epoxysysteme sein. Für reaktive Klebstoffsysteme werden die Polyole beispielsweise in der Regel mit einem Überschuss an Diisocyanaten zu reaktiven, feuchtigkeitshärtenden Polymeren (Prä-Polymeren) umgesetzt. Die reaktiven Schmelzklebstoffe werden üblicherweise als Schmelze aufgetragen und besitzen eine Anfangsfestigkeit. Durch die reaktiven Endgruppen erfolgt eine Reaktion mit der Luftfeuchtigkeit, sodass das Polymer weiter aushärtet und anschließend nicht mehr oder nur sehr schwer aufgeschmolzen werden kann.

Derartige reaktive Klebstoffsysteme zeichnen sich durch eine schnelle Aushärtung sowie eine hohe Formulierungsflexibilität und ein breites Anwendungsspektrum aus. So können beispielsweise Holz, Textilien oder Metalle sehr gut verklebt werden. Ein Nachteil ist jedoch, dass sehr unpolare Materialien, beispielsweise niedrig-energetische Kunststoffe wie Polyethylen oder Polypropylen ohne Vorbehandlung der Oberfläche, in der Regel aufgrund einer schlechten Benetzung nicht mit reaktiven Schmelzklebstoffen basierend auf Polyestern verklebt werden können. Für derartige Verklebungen werden üblicherweise thermoplastische oder silanmodifizierte Polyolefine benutzt. Das Problem hierbei ist, dass Polyolefine nicht mit den Polyester-basierten Systemen verträglich oder mischbar sind. Ebenfalls benötigt die Aushärtung solcher Polyolefin-basierter Klebstoffe üblicherweise länger.

Ebenfalls können kontaminierte, beispielsweise ölige Oberflächen, ohne eine Vorreinigung nicht mit reaktiven Schmelzklebstoffen basierend auf Polyestern verklebt werden. Für derartige Verklebungen können beispielsweise Polybutadiene verwendet werden. Auch hier ist das Problem, dass Polybutadiene nicht mit Polyester-basierten Systemen verträglich oder mischbar sind.

Diese Nachteile können durch die Verwendung von Block-Copolymeren überwunden werden, bei denen die unterschiedlichen Komponenten über kovalente Bindungen miteinander verknüpft werden, um eine Verträglichkeit zu erhalten.

WO 2013/177266 beschreibt Copolymere und deren Herstellung, die als Sauerstofffänger eingesetzt werden können. Die Copolymere sind vorzugsweise aufgebaut aus Caprolacton und Hydroxy-terminiertem Polybutadien.

WO 2016/026807 beschreibt Polyester-modifizierte Polybutadiendiole zur Herstellung von Polyurethan-Elastomeren und thermoplastischen Polyurethanen. Diese Polyurethan-Elastomere und thermoplastischen Polyurethane können z.B. zu Folien, Schläuchen oder Kabelummantelungen verarbeitet oder zur Herstellung von Rollen, Sieben, Filtern, Industrie- und Sportböden oder Klebstoffen verwendet werden.

Darüber hinaus sind Block-Copolymere aufgebaut aus Hydroxy-terminiertem Polybutadien und zyklischen Estern sowie deren Herstellung umfangreich in der akademischen Literatur beschrieben. So ist die Umsetzung von Hydroxy-funktionellem Polybutadien mit Lactid (Macromolecules 2013, 46, 7387-7398) oder mit Caprolacton (Macromolecules 2006, 39, 711-719) als zyklische Ester mit einem Zinn-Katalysator beschrieben. Ebenfalls kann Hydroxy-terminiertes Polybutadien durch Butyllithium zum Alkoholat deprotoniert werden, welches anschließend mit Caprolacton zu dem entsprechendem Block-Copolymer polymerisiert (e-Polymers 2009, vol 032).

Weiterhin kann als weiteres OH-funktionelles Polyolefin auch Hydroxy-funktionelles Polyisopren zur Herstellung entsprechender Block-Copolymere genutzt werden. So ist die Herstellung von entsprechenden Block-Copolymeren auf Basis von OH-funktionellem Polyisopren und Lactid unter Einsatz eines Aluminium-Katalysators beschrieben (Macromol. Rapid Commun. 2000, 21, 1317-1322 & Biomacromolecules 2003, 4, 216-223).

Allgemein ist der Auswahl von möglichen Katalysatoren zur Polymerisation von zyklischen Estern über OH-funktionelle Initiatoren nahezu unbegrenzt. In Chem. Rev. 2004, 104, 6147-6176 werden beispielsweise zahlreiche Katalysatoren beschrieben, die zur Ringöffnungspolymerisation von Lactid oder Glycolid als zyklischen Estern genutzt werden können.

Ein Umsatz von Block-Copolymeren basierend auf OH-funktionellem Polyolefin und zyklischen Estern mit einem Überschuss Diisocyanat zur Herstellung von NCO-terminierten Prä-Polymeren sowie insbesondere der Einfluss der zur Herstellung der Block-Copolymeren genutzten Katalysatoren auf diese Folgereaktion ist hingegen noch nicht beschrieben.

Aufgabe der vorliegenden Erfindung war daher die Bereitstellung von Zusammensetzungen, die das Umsetzungsprodukt eines Block-Copolymers auf Basis von OH-funktionalisiertem Polyolefin, bevorzugt OH-funktionalisiertem Polybutadien und zyklischen Estern als Polyol, welches mindestens 1,8 OH-Gruppen aufweist, und mindestens einer Isocyanatverbindung, die mindestens zwei Isocyanatgruppen aufweist, die nach dem Umsatz mit einem Überschuss Diisocyanat eine niedrige Viskosität aufweisen.

Überraschenderweise wurde gefunden, dass diese Aufgabe gelöst werden kann, wenn die Zusammensetzung von 0,0001 Gew.-% bis 40 Gew.-% Titan aufweist und einen Gehalt an freien Isocyanatgruppen von mindestens 0,1 Gew.-% bezogen auf die Gesamtzusammensetzung aufweist.

Gegenstand der vorliegenden Erfindung sind deshalb die nachfolgend beschriebenen und in den Ansprüchen beanspruchten Zusammensetzungen.

Ebenfalls Gegenstand der vorliegenden Erfindung ist ein Verfahren zur Herstellung der erfindungsgemäßen Zusammensetzungen.

Außerdem ist Gegenstand der vorliegenden Erfindung die Verwendung der erfindungsgemäßen Zusammensetzungen zur Herstellung von Kleb- und Dichtstoffen sowie deren Verwendung zum Verkleben von Substraten sowie die Verwendung als Dichtstoffe.

Die erfindungsgemäßen Zusammensetzungen haben den Vorteil, dass freie NCO-Gruppen in der Zusammensetzung vorhanden sind. Solche frei vorhandenen NCO-Gruppen sind hochreaktiv und elementare Voraussetzung für feuchtigkeitshärtende Reaktivklebstoffe.

Die erfindungsgemäßen Zusammensetzungen weisen außerdem den Vorteil auf, dass sie trotz eines Überschusses an NCO-Gruppen eine niedrige Viskosität aufweisen. Zusätzlich weisen die erfindungsgemäßen Zusammensetzungen eine gute Verarbeitungsstabilität auf, wobei sich die Verarbeitungsstabilität durch den Anstieg der Viskosität bei temperierter Lagerung definiert.

Die erfindungsgemäßen Zusammensetzungen, das erfindungsgemäße Verfahren zu deren Herstellung und die erfindungsgemäße Verwendung der Zusammensetzungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Unter OH-funktionellen Polyolefinen werden im Rahmen der vorliegenden Erfindung solche Polymere verstanden, die auf Alkenen und/oder Polyenen als Monomere basieren. Im Rahmen der vorliegenden Erfindung bestehen die Wiederholungseinheiten der Polyolefine ausschließlich aus den Elementen Kohlenstoff und Wasserstoff und weisen keine aromatischen Strukturen auf. Die Polyolefine können dabei einen beliebigen Anteil an Doppelbindungen enthalten.

Die erfindungsgemäßen Zusammensetzungen, enthaltend mindestens das Umsetzungsprodukt eines Block-Copolymers auf Basis von OH-funktionellem, vorzugsweise OH-terminiertem Polyolefin, welches auch anteilig oder vollständig hydriert vorliegen kann, vorzugsweise aber unhydriert ist, bevorzugt OH-funktionellem, vorzugsweise OH-terminiertem Polybutadien, welches auch anteilig oder vollständig hydriert vorliegen kann, vorzugsweise aber unhydriert ist, und zyklischen Estern als Polyol, welches mindestens 1,8, vorzugsweise mindestens zwei OH-Gruppen aufweist, und mindestens einer Isocyanatverbindung, die mindestens zwei Isocyanatgruppen aufweist, zeichnen sich dadurch aus, dass die Zusammensetzungen von 0,0001 bis 40 Gew.-%, bevorzugt von 0,0002 bis 1 Gew.-% und besonders bevorzugt von 0,001 bis 0,1 Gew.-% Titan aufweisen und einen Gehalt an freien Isocyanatgruppen von mindestens 0,1 Gew.-%, bevorzugt 0,5 bis 10 Gew.-%, besonders bevorzugt von 1 bis 5 Gew.-% bezogen auf die Gesamtzusammensetzung aufweisen.

Das in der erfindungsgemäßen Zusammensetzung enthaltene Titan liegt vorzugsweise als organische Titan(IV)-verbindungen, beispielsweise Titan(IV)-alkoholat, Titan(IV)-carboxylat oder Titan(IV)-acetylacetonat vor. Bevorzugt handelt es sich bei der Titan(IV)-verbindung um ein Titan(IV)-alkoholat, wobei es vorteilhaft sein kann, wenn es sich bei dem Liganden um ein zweizähniges Diol handelt. Beispiele bevorzugter Titan(IV)-verbindungen sind Titantetramethanolat, Titantetraethanloat, Titantetrapropylat, Titantetraisopropylat, Titantetra-n-butylat, Titantetra-*t*-butylat, Titantetraphenylat, Titanoxidacetylacetonat, Titanacetylacetonat sowie Titandialkoholate basierend auf Diolen. Vorzugsweise liegt das Titan nicht als Verbindung vor, die einen Amino-gruppen haltigen Ligand aufweist.

Vorzugsweise handelt es sich bei den erfindungsgemäß eingesetzten Block-Copolymeren auf Basis von OH-funktionellem, vorzugsweise OH-terminiertem Polyolefin, welches auch anteilig oder vollständig hydriert vorliegen kann, vorzugsweise aber unhydriert ist, bevorzugt OH-funktionellem, vorzugsweise OH-terminiertem Polybutadien, welches auch anteilig oder vollständig hydriert vorliegen kann, vorzugsweise aber unhydriert ist, um B(A)_{w}-Blocksysteme, mit A = Polyester, mit B = OH-funktionellem, vorzugsweise OH-terminiertem Polyolefin, welches auch anteilig oder vollständig hydriert vorliegen kann, vorzugsweise aber unhydriert ist, bevorzugt OH-funktionellem, vorzugsweise OH-terminiertem Polybutadien, welches auch anteilig oder vollständig hydriert vorliegen kann, vorzugsweise aber unhydriert ist, und mit w ≥ 1,8, vorzugsweise w ≥ 2 bis 5, bevorzugt w > 2 bis 3. Der Wert für w spiegelt die Funktionalität des OH-funktionalisierten, bevorzugt terminierten, Polyolefin wieder. In der Regel liegt die Funktionalität der OH-funktionalisierten, bevorzugt terminierten, Polyolefin, und damit w im Bereich von 1,8 bis 5, vorzugsweise im Bereich von 2 bis 3,5, insbesondere bevorzugt im Bereich von 2 bis 3. Im Falle von w = 2, also bei OH-funktionalisierten, bevorzugt terminierten, Polyolefinen mit einer Funktionalität von 2, handelt es sich bei den Block-Copolymeren insbesondere um ABA-Triblocksysteme. Weiterhin sind ebenfalls Block-Strukturen der Formel (AB)ₘ möglich, wobei m > 1 ist.

Detaillierter lassen sich die erfindungsgemäß eingesetzten Block-Copolymere auf Basis von OH-funktionellem, vorzugsweise OH-terminiertem Polyolefin, welches auch anteilig oder vollständig hydriert vorliegen kann, vorzugsweise aber unhydriert ist, bevorzugt OH-funktionellem, vorzugsweise OH-terminiertem Polybutadien, welches auch anteilig oder vollständig hydriert vorliegen kann, vorzugsweise aber unhydriert ist, und zyklischen Estern als B'(OA'-H)_{w}- Systeme beschreiben, mit B' = Polyolefinrest, w wie oben definiert und A' = Polyesterrest der Struktur (I), 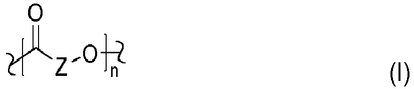 mit Z = gleiche oder verschiedene Kohlenwasserstoffreste, bevorzugt -C₅H₁₀- und/oder - C(CH₃)H- Rest, besonders bevorzugt -C₅H₁₀- Rest und n = 1-150, vorzugsweise 3 bis 120. Vorzugsweise ist B' ein Polybutadienrest enthaltend die oder vorzugsweise bestehend aus den von 1,3-Butadien abgeleiteten Monomereinheiten 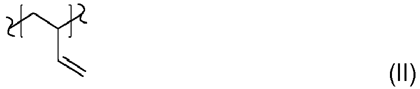 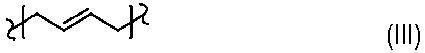 und 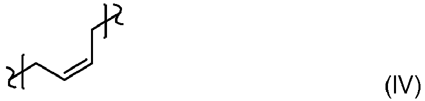 mit der Maßgabe, dass die Monomereinheiten (II), (III) und (IV) blockweise oder statistisch verteilt angeordnet sein können und bezogen auf das Polybutadien der prozentuale Anteil der Wiederholungseinheit (II) = 10 bis 40 Molprozent, vorzugsweise 15 bis 30 Molprozent und bevorzugt 20 bis 25 Molprozent beträgt, bezogen auf die Wiederholungseinheit (III) = 40 bis 85 Molprozent, vorzugsweise 50 bis 70 Molprozent und bevorzugt 55 bis 60 Molprozent beträgt und der Anteil der Wiederholungseinheit (IV) 5 bis 40 Molprozent, vorzugsweise 15 bis 30 Molprozent und bevorzugt 15 bis 25 Molprozent beträgt, wobei eine eckige Klammer bei der gewählten formelmäßigen Darstellung der im Polybutadien enthaltenen aus 1,3-Butadien abgeleiteten Monomereinheiten (II), (III) und (IV) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer Hydroxygruppe verbunden ist. Bevorzugt können zusätzlich zu einem Anteil von bis zu 5 Molprozent bezogen auf das Polybutadien eine oder mehrere verzweigende Struktur/en der Formeln (V), (VI) oder (VII) 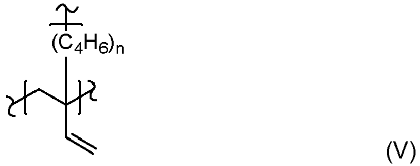 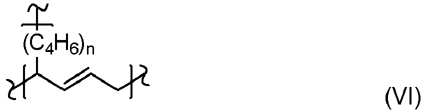 und/oder 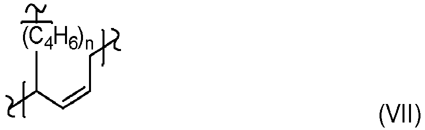 vorhanden sein, wobei "(C₄H₆)ₙ" einer Butadien-Oligomer enthaltend die oder vorzugsweise bestehend aus den Wiederholungseinheiten (II), (III) und (IV) entspricht. Das GewichtsVerhältnis der Strukturen A' zu B' beträgt vorzugsweise von 1:19 bis 19:1.

Die Isocyanatverbindung ist vorzugsweise 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat oder Mischungen daraus, bevorzugt 4,4'-Diphenylmethandiisocyanat oder eine Mischung aus 4,4'-Diphenylmethandiisocyanat und 2,4'-Diphenylmethandiisocyanat.

Die erfindungsgemäße Zusammensetzung kann neben dem Umsetzungsprodukt eines Block-Copolymers auf Basis von OH-funktionellem Polyolefin und zyklischen Estern als Polyol, welches mindestens 1,8, vorzugsweise mindestens zwei OH-Gruppen aufweist, und mindestens einer Isocyanatverbindung, weitere Polyole oder deren Umsetzungsprodukte, die durch Umsetzung der weiteren Polyole mit Di- oder Polyisocyanaten, insbesondere den oben genannten Diisocyanaten, erhalten werden, enthalten.

Als optionale weitere Polyole können z.B. Polyesterpolyole, Polyetherpolyole und beliebige hydroxylfunktionelle Komponenten, oder deren Umsetzungsprodukte enthalten sein. Die Wahl dieser optionalen Polyole ist an sich beliebig.

Als optionale weitere Polyesterpolyole können z.B. flüssige oder feste, amorphe oder (teil-)kristalline Polyesterpolyole mit Molekulargewichten mit einem Zahlenmittel zwischen 1000 g/mol und 30000 g/mol, bevorzugt zwischen 2000 g/mol und 10000 g/mol (berechnet aus der Hydroxylzahl) eingesetzt werden, wobei lineare Polyesterpolyole bevorzugt verwendet werden.

Als optionale Polyetherpolyole können z.B. Polyetherdi- oder -triole eingesetzt werden. Beispiele hierfür sind z.B. Homo- und Copolymere aus Ethylenglykol, Propylenglykol und/oder Butandiol-1,4. Das Molekulargewicht (Zahlenmittel) der beigemischten Polyetherpolyole sollte vorzugsweise in einem Bereich von 1000 g/mol bis 10000 g/mol, bevorzugt zwischen 2000 g/mol und 8000 g/mol liegen.

Als optionale beliebige hydroxyfunktionelle Komponenten werden vorzugsweise hydroxyfunktionelle Polyolefine wie hydroxyfunktionelle Polybutadiene, hydroxyfunktionelle Polyisoprene, hydroxyfunktionelle Polycarbonate oder hydroxyfunktionelle Polyacrylate eingesetzt.

Die erfindungsgemäßen Zusammensetzungen können darüber hinaus bis zu 50 Gew.-%, bezogen auf die gesamte Zusammensetzung, an weiteren Additiven enthalten.

Diese Additive können zum Beispiel sein: nicht OH-funktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel.

Bei den erfindungsgemäßen Zusammensetzungen kann es sich vorzugsweise um einkomponentige oder zweikomponentige, feuchtigkeits- oder thermisch-vernetzende Polyurethanklebstoffe handeln.

Die erfindungsgemäßen Zusammensetzungen können auf verschiedene Weisen erhalten werden. Vorzugsweise werden die erfindungsgemäßen Zusammensetzungen durch das nachfolgend beschriebene, erfindungsgemäße Verfahren erhalten.

Das erfindungsgemäße Verfahren zur Herstellung eines Umsetzungsprodukts eines Block-Copolymers auf Basis von OH-funktionellem, vorzugsweise OH-terminiertem Polyolefin, welches auch anteilig oder vollständig hydriert vorliegen kann, vorzugsweise aber unhydriert ist, bevorzugt OH-funktionellem, vorzugsweise OH-terminiertem Polybutadien, welches auch anteilig oder vollständig hydriert vorliegen kann, vorzugsweise aber unhydriert ist, und zyklischen Estern, als Polyol, welches mindestens 1,8, vorzugsweise mindestens zwei OH-Gruppen aufweist, und mindestens einer Isocyanatverbindung, die mindestens zwei Isocyanatgruppen aufweist, zeichnet sich dadurch aus, dass die Umsetzung in Gegenwart einer Titan aufweisenden Verbindung erfolgt und so viel Isocyanatverbindung eingesetzt wird, dass das Verhältnis von OH-Gruppen zu Isocyanat-Gruppen von 1 zu 1,1 bis 1 zu 5, bevorzugt 1 zu 1,5 bis 1 zu 3 beträgt.

Als Titan aufweisende Verbindung wird vorzugsweise eine organische Titan(IV)-verbindung, bevorzugt Titan(IV)-alkoholat, Titan(IV)-carboxylat oder Titan(IV)-acetylacetonat eingesetzt. Bevorzugt handelt es sich bei der Titan(IV)-verbindung um ein Titan(IV)-alkoholat, wobei es vorteilhaft sein kann, wenn es sich um einen zweizähnigen Liganden in Form eines Diols handelt. Beispiele bevorzugter Titan(IV)-verbindungen sind Titantetramethanolat,

Titantetraethanloat, Titantetrapropylat, Titantetraisopropylat, Titantetra-*n*-butylat, Titantetra-*t-*butylat, Titantetraphenylat, Titanoxidacetylacetonat, Titanacetylacetonat sowie Titandialkoholate basierend auf Diolen. Vorzugsweise liegt das Titan nicht als Verbindung vor, die einen Amino-gruppen haltigen Ligand aufweist.

Bevorzugt wird die Titan aufweisende Verbindung bereits bei der Herstellung des Block-Copolymers, vorzugsweise als Katalysator, eingesetzt. Der Anteil an Titan in der Reaktionsmischung beträgt vorzugsweise von 0,0001 Gew.-% bis 1 Gew.-%, bevorzugt 0,001 bis 0,1 Gew.-%.

Die Herstellung der Block-Copolymere erfolgt vorzugsweise durch Ringöffnungsreaktion (bzw. -polymerisation), bevorzugt bei Temperaturen von 20 bis 250 °C, vorzugsweise in einem Zeitraum von 0,1 bis 20 Stunden. Die Ringöffnungsreaktion kann vorzugsweise in der Schmelze oder in Anwesenheit von Lösungsmitteln durchgeführt werden.

Vorzugsweise werden in dem erfindungsgemäßen Verfahren als zyklische Ester C₃-Lactone wie β-Propiolacton, C₄-Lactone wie β-Butyrolacton oder γ-Butyrolacton, C₅-Lactone wie 4-Hydroxy-3-pentensäure-gamma-lacton, α-Methylene-γ-butyrolacton, γ-Methylene-γ-butyrolacton, 3-Methyl-2(5H)-furanon, γ-Valerolacton, δ-Valerolacton, C₆-Lactone wie δ-Hexalacton, ε-Caprolacton oder γ-Hexalacton, oder weitere Lactone wie 5-Butyl-4-methyldihydro-2(3H)-furanon, δ-Octanolactone, γ-Phenyl-ε-caprolacton, Oxacyclododecan-2-on, Oxacyclotridecan-2-on, Pentadecanolid, 16-Hexadecanolid, γ-Undecalacton, δ-Undecalacton, γ-Methylene-γ-butyrolacton oder Lactid oder Mischungen daraus, bevorzugt ε-Caprolacton und/oder Lactid, eingesetzt.

In einer besonderen Ausführungsform wird bevorzugt eine Mischung aus ε-Caprolacton und Lactid eingesetzt.

Vorzugsweise wird in dem erfindungsgemäßen Verfahren als zyklischer Ester mindestens ε-Caprolacton und gegebenenfalls Lactid eingesetzt.

Als Hydroxy-funktionelles, vorzugsweise Hydroxy-terminiertes Polyolefin, bevorzugt, Polybutadien wird vorzugsweise ein Polybutadien enthaltend die oder vorzugsweise bestehend aus den von 1,3-Butadien abgeleiteten Monomereinheiten 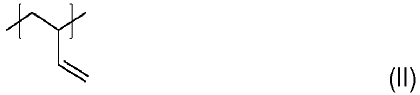 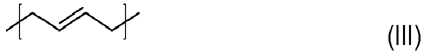 und 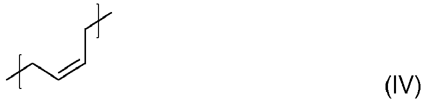 mit der Maßgabe, dass die Monomereinheiten (II), (III) und (IV) blockweise oder statistisch verteilt angeordnet sein können und bezogen auf das Polybutadien der prozentuale Anteil der Wiederholungseinheit (II) = 10 bis 40 Molprozent, vorzugsweise 15 bis 30 Molprozent und bevorzugt 20 bis 25 Molprozent beträgt, bezogen auf die Wiederholungseinheit (III) = 40 bis 85 Molprozent, vorzugsweise 50 bis 70 Molprozent und bevorzugt 55 bis 60 Molprozent beträgt und der Anteil der Wiederholungseinheit (IV) 5 bis 40 Molprozent, vorzugsweise 15 bis 30 Molprozent und bevorzugt 15 bis 25 Molprozent beträgt wobei eine eckige Klammer bei der gewählten formelmäßigen Darstellung der im Polybutadien enthaltenen aus 1,3-Butadien abgeleiteten Monomereinheiten (II), (III) und (IV) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer Hydroxygruppe verbunden ist. Bevorzugt können zusätzlich zu einem Anteil von bis zu 5 Molprozent bezogen auf das Polybutadien eine oder mehrere verzweigende Struktur/en 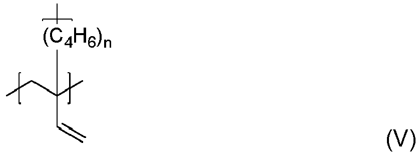 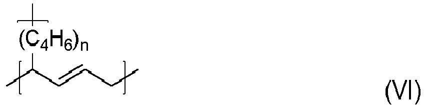 und/oder 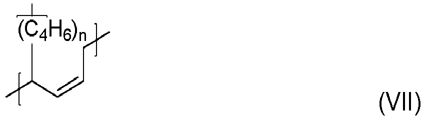 vorhanden sein, wobei "(C₄H₆)ₙ" einem Butadien-Oligomer enthaltend die oder vorzugsweise bestehend aus den Wiederholungseinheiten (II), (III) und (IV) entspricht und die jeweiligen Kettenenden OH-Gruppen sind.

Das zahlenmittlere Molekulargewicht, bestimmt durch Gelpermeationschromatographie, der hydroxyterminierten Polybutadiene liegt vorzugsweise von 500 bis 10.000 g/mol, bevorzugt von 1.000 bis 5.000 g/mol und besonders bevorzugt von 1.500 und 4.000 g/mol.

Darüber hinaus kann das Polybutadien in einer teilweise oder vollständig hydrierten Form vorliegen.

Die erfindungsgemäß eingesetzten hydroxyterminierten Polybutadiene werden vorzugsweise mittels radikalischer Polymerisation, beispielsweise durch Polymerisation von 1,3-Butadien in Anwesenheit von Wasserstoffperoxid, Wasser und einem organischen Lösungsmittel hergestellt. Geeignete Verfahren sind beispielsweise in EP 2 492 292 beschrieben.

Die im Rahmen der vorliegenden Erfindung vorzugsweise einsetzbaren Polybutadiene sind kommerziell erhältlich, beispielsweise als POLYVEST® HT von der Evonik Resource Efficiency GmbH.

Die Funktionalität der eingesetzten OH-funktionellen, vorzugsweise OH-terminierten Polyolefine, bevorzugt Polybutadiene, welche auch anteilig oder vollständig hydriert vorliegen können, vorzugsweise aber unhydriert sind, liegt vorzugsweise im Bereich von 1,8 bis 5, bevorzugt im Bereich von 2 bis 3,5, und insbesondere bevorzugt im Bereich von 2 bis 3.

Es ist möglich, die Funktionalität des OH-funktionellen Polyolefins sowie des erhaltenen Block-Copolymers beispielsweise durch die Reaktion von Monoisocyanaten mit den OH-Gruppen einzustellen.

Wesentlich im Rahmen der vorliegenden Erfindung ist das Vorliegen von OH-Gruppen zur Bildung der Copolymere. Diese OH-Gruppen sind vorzugsweise am Kettenende des Polybutadiens vorhanden, darüber hinaus können in den OH-terminierten Polybutadienen weitere OH-Gruppen entlang der Kette vorliegen. Im Rahmen der vorliegenden Erfindung wird die Funktionalität bestimmt durch die Korrelation von Molekulargewicht zu OHZ.

Bevorzugt wird in dem erfindungsgemäßen Verfahren als zyklischer Ester mindestens ε-Caprolacton und gegebenenfalls Lactid und als Hydroxy-funktionelles Polyolefin ein Polybutadien wir vorstehend beschrieben eingesetzt.

Als Isocyanatverbindung wird vorzugsweise 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat oder Mischungen daraus, bevorzugt 4,4'-Diphenylmethandiisocyanat oder eine Mischung aus 4,4'-Diphenylmethandiisocyanat und 2,4'-Diphenylmethandiisocyanat eingesetzt.

Mit dem erfindungsgemäßen Verfahren werden vorzugsweise die erfindungsgemäßen Zusammensetzungen hergestellt. Neben den erfindungsgemäß hergestellten Umsetzungsprodukten können die erfindungsgemäßen Zusammensetzungen weitere Polyole oder deren Umsetzungsprodukte, die durch Umsetzung der weiteren Polyole mit Di- oder Polyisocyanaten, insbesondere den oben genannten, erhalten werden, enthalten.

Es kann dabei vorteilhaft sein, wenn die weiteren Polyole mit den Block-Copolymeren auf Basis von OH-funktionellem, vorzugsweise OH-terminiertem Polyolefin, welches auch anteilig oder vollständig hydriert vorliegen kann, vorzugsweise aber unhydriert ist, bevorzugt OH-funktionellem, vorzugsweise OH-terminiertem Polybutadien, welches auch anteilig oder vollständig hydriert vorliegen kann, vorzugsweise aber unhydriert ist, und zyklischen Estern als Polyolen gemischt werden, bevor die Umsetzung mit der oder den Isocyanatverbindungen, die mindestens zwei Isocyanat-Gruppen aufweisen, erfolgt.

Als optionale weitere Polyole können z.B. Polyesterpolyole, Polyetherpolyole und beliebige hydroxylfunktionelle Komponenten eingesetzt werden. Die Wahl dieser optionalen Polyole ist an sich beliebig.

Als optionale weitere Polyester können z.B. flüssige oder feste, amorphe oder (teil-)kristalline Polyester mit Molekulargewichten mit einem Zahlenmittel zwischen 1000 g/mol und 30000 g/mol, bevorzugt zwischen 2000 g/mol und 10000 g/mol (berechnet aus der Hydroxylzahl) eingesetzt werden, wobei lineare Polyesterpolyole bevorzugt verwendet werden.

Als optionale Polyetherpolyole können z.B. Polyetherdi- oder -triole eingesetzt werden. Beispiele hierfür sind z.B. Homo- und Copolymere aus Ethylenglykol, Propylenglykol und/oder Butandiol-1,4. Das Molekulargewicht (Zahlenmittel) der beigemischten Polyetherpolyole sollte vorzugsweise in einem Bereich von 1000 g/mol bis 10000 g/mol, bevorzugt zwischen 2000 g/mol und 8000 g/mol liegen.

Als optionale beliebige hydroxyfunktionelle Komponenten werden vorzugsweise hydroxyfunktionelle Polyolefine wie hydroxyfunktionelle Polybutadiene, hydroxyfunktionelle Polyisoprene, hydroxyfunktionelle Polyolefine, hydroxyfunktionelle Polycarbonate oder hydroxyfunktionelle Polyacrylate eingesetzt.

Die erfindungsgemäßen Zusammensetzungen eignen sich in besonderer Weise zur Herstellung von Verklebungen einer Vielzahl von Substraten, z. B. Kunststoffe, Metalle, Holzarten, mineralische Untergründe wie z. B. Asphalt, Beton, insbesondere zur Verklebung von metallischen Substraten, Textilien und ganz besonders zur Verklebung diverser Kunststoffe. Die Art und der Umfang der Verklebung sind dabei nicht limitiert.

Bevorzugt handelt es sich bei den Substraten um ölige Substrate. Unter öligen Substraten sind solche Untergründe zu verstehen, die auf der Oberfläche natürliche, synthetische oder mineralische Öle enthalten. Dabei können die öligen Substanzen durch Verarbeitungsschritte auf die Substrate gelangen (z. B. Ziehfette, Wachse, Trennmittel etc.) bzw. in die Substrate gelangen oder sie können aus dem Substrat an die Oberfläche gelangen (z. B. ölhaltige Holzarten wie beispielsweise Teak-Holz oder Meranti-Holz).

Vorzugsweise handelt es sich bei den Verklebungen um Verklebungen in der Holz- und Möbelindustrie (beispielsweise Montageverklebung sowie die Kaschierung und Laminierung von Dekorfolien auf Faserplatten), im Automobilbereich (beispielsweise Kaschierungen von Folien oder Textilien auf Türseitenteilen, Dachhimmel, die Sitzherstellung sowie Retainerverklebungen, Anbauteile im (semi)-strukturellen Bereich, faserverstärkten Verbundwerkstoffen oder/und Metalle), in der Bauindustrie, Schuhindustrie und Textilindustrie (beispielsweise silikonisierte oder hydrophobierte Textilien) sowie im Fensterbau (beispielsweise zur Profilummantelung). Weiterhin eignen sich die erfindungsgemäßen Klebstoffe in der Verpackungsindustrie, als Dichtstoffe sowie als Beschichtungsmaterial.

Die erfindungsgemäßen Umsetzungsprodukte eignen sich sowohl für den Einsatz in einkomponentigen als auch in zweikomponentigen Systemen.

Bei den einkomponentigen Klebstoffen erfolgt die Herstellung der Mischung zeitlich unabhängig vom Klebstoffauftrag, üblicherweise zu einem deutlich früheren Zeitpunkt. Nach dem Auftrag des erfindungsgemäßen Klebstoffs erfolgt die Härtung beispielsweise durch Feuchtigkeit oder thermisch induzierte Reaktion der im Klebstoff enthaltenen Reaktionspartner. Bei den zweikomponentigen Klebstoffen wird die Mischung unmittelbar vor Klebstoffauftrag hergestellt.

Die erfindungsgemäßen Klebstoff-Formulierungen (Zusammensetzungen) können durch alle bekannten Methoden appliziert werden, z. B. Extruder, Raupe, Düse, Streichen, Tauchen, Spritzen, Gießen, Walzen, Sprühen, Drucken, Wischen, Waschen, Trommeln, Zentrifugieren, Pulver (elektrostatisch).

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Der Gegenstand der vorliegenden Erfindung wird in den nachfolgenden Beispielen näher erläutert, ohne dass der Gegenstand der vorliegenden Erfindung darauf beschränkt sein soll.

### Beispiele:

### Messmethoden:

### 1. Gelpermeationschromatographie

Das zahlenmittlere und das gewichtsmittlere Molekulargewicht der im Rahmen der vorliegenden Erfindung eingesetzten Block-Copolymere wird nach DIN 55672-1 mittels Gelpermeationschromatographie in Tetrahydrofuran als Eluent und Polystyrol zur Kalibrierung bestimmt. Die Polydispersität (U) = Mw/Mn.

### 2. OHZ

Die hergestellten Block-Copolymere besitzen Hydroxylgruppen als Endgruppen. Die Konzentration der OH-Gruppen wird nach DIN 53240-2 titrimetrisch in mgKOH / g Polymer bestimmt.

### 3. Viskosität

Die Viskosität der hergestellten Block-Copolymere sowie der Umsetzungsprodukte aus Block-Copolymer und Diisocyanat wurde in Anlehnung an die DIN EN ISO 3219 mit einem Rotationsviskosimeter in Pa.s bei der jeweils angegeben Temperatur ermittelt.

### 4. NCO-Zahl

Die NCO-Zahl der hergestellten Umsetzungsprodukte aus Block-Copolymer mit Diisocyanat wurde in Anlehnung an die DIN EN 1242 titrimetrisch in Gew-% ermittelt.

### Eingesetzte Rohstoffe:

- POLYVEST® HT: Hydroxyterminiertes Polybutadien der Fa. Evonik Resource Efficiency GmbH
- DYNACOLL 7360: Hydroxyterminierter Polyester der Fa. Evonik Resource Efficiency GmbH
- ε-Caprolacton (Fa. BASF SE)
- Lupranat® ME: 4,4'- Diphenylmethane diisocyanate (MDI - Fa. BASF SE)

### Eingesetzte Katalysatoren:

Die eingesetzten Katalysatoren können Tabelle 1 entnommen werden

**Tabelle 1: Angaben zu den eingesetzten Katalysatoren**

| Name | IUPAC-Name (CAS-Nr.) | Hersteller |
|---|---|---|
| Zr(acac)₄ | Zirconium(IV)-acetylacetonate (17501-44-9) | Merck Millipore |
| Al(acac)₃ | Aluminum acetylacetonate (13963-57-0) | Sigma Aldrich |
| Zn(acac)₂ | Bis(2,4-pentanedionato)zinc(II) (14024-63-6) | TCI Deutschland GmbH |
| Tytan TET | Titanium bis(triethanolamine)diisopropoxide (36673-16-2) | Borica Co., Ltd |
| Tytan TNBT | Titantetra-n-butanolat (5593-70-4) | Borica Co., Ltd |
| Ken-React TTS | Titanium triisostearoylisopropoxide (61417-49-0) | Kenrich Petrochemicals, Inc |
| TiO(acac)₂ | Titanium(IV) oxide bis(acetylacetonate) (14024-64-7) | abcr GmbH |

### Beispiel 1a-h: Herstellung der Block-Copolymere:

450 g POLYVEST® HT (hydroxyterminiertes Polybutadien der Fa. Evonik Resource Efficiency GmbH) wurden mit 1050 g ε-Caprolacton und der in Tabelle 1 angegebenen Menge Katalysator unter Stickstoffstrom in einen 2 l Mehrhalskolben mit Rückflusskühler vermengt. Anschließend wurde die Mischung unter stetem Stickstoffstrom auf 160 °C für 6 Stunden erhitzt. Das daraus hergestellte Block-Copolymer wurde per GPC-Analyse auf vollständigen Umsatz untersucht und konnte anschließend ohne weitere Aufarbeitungen zur Herstellung des Reaktivklebstoffes verwendet werden. Die Einsatzmengen sowie die Ergebnisse der Ausprüfung der erhaltenen Block-Copolymere können den Tabellen 2a und 2b entnommen werden.

### Beispiel 2a-h: Umsetzen des Block-Ccopolymers mit Diisocyanat

In einem 500 ml Planschliffkolben wurden 300g der Block-Copolymere aus Beispiel 1a-h bei 130 °C für 45 Minuten im Vakuum getrocknet. Danach wurden ca. 32g 4,4'-Diphenylmethandiisocyanat (Lupranat® ME) in einem molaren OH/NCO-Verhältnis von 1:3,0 (die genaue Menge ist abhängig von der OHZ des Block-Copolymers) zugegeben und zügig homogenisiert. Zur vollständigen Umsetzung der Reaktionspartner wurde 45 Minuten bei 130 °C unter Schutzgasatmosphäre gerührt. Anschließend wurde der feuchtigkeitshärtende Schmelzklebstoff (RHM) bzgl. Viskosität und NCO-Gehalt analysiert und abgefüllt.

Die Einsatzmengen sowie die Ergebnisse der Ausprüfung der erhaltenen Zusammensetzungen (RHM) können den Tabellen 2a und 2b entnommen werden.

**Tabelle 2a: Einsatzmengen der in den Beispielen 1a-h und 2a-h verwendeten Substanzen sowie Ergebnisse der Ausprüfung**

| **Eigenschaften Block-Copolymer** | | Beispiel 1a (vgl.) | Beispiel 1b (vgl.) | Beispiel 1c (vgl.) | Beispiel 1d (erfindungsgemäß) |
|---|---|---|---|---|---|
| Katalysator (Gew-%) | | Zr(acac)₄ (0.02) | Al(acac)₃ (0.02) | Zn(acac)₂ (0,02) | TYTAN TET (0,005) |
| Aktives Metall | | Zr | Al | Zn | Ti |
| OHZ | mgKOH/g | 14 | 14 | 17 | 14 |
| Viskosität (80°C) | Pa.s | 12.4 | 11.8 | 8.3 | 14.5 |
| GPC *M*ₙ | g/mol | 9200 | 11500 | 12400 | 7900 |
| GPC *M*_{w} | g/mol | 23000 | 22800 | 21300 | 22600 |

| **Eigenschaften RHM (nach Reaktion mit MDI)** | | Beispiel 2a (vgl.) | Beispiel 2b (vgl.) | Beispiel 2c (vgl.) | Beispiel 2d (erfindungsgemäß) |
|---|---|---|---|---|---|
| Viskosität (130°C) | Pa.s | 72.5 | 76.9 | 334 | 66.7 |
| NCO-Gehalt | % | 1.7 | 1.7 | 2.2 | 1.8 |

**Tabelle 2b: Einsatzmengen der in den Beispielen 1a-h und 2a-h verwendeten Substanzen sowie Ergebnisse der Ausprüfung**

| **Eigenschaften Block-Copolymer** | | Beispiel 1e (erfindungsgemäß) | Beispiel 1f (erfindungsgemäß) | Beispiel 1g (erfindungsgemäß) | Beispiel 1h (erfindungsgemäß) |
|---|---|---|---|---|---|
| Kataiysator (Gew-%) | | TYTAN TNBT (0,005) | TYTAN TNBT (0,02) | Ken-React (0,005) | TiO(acac)₂ -(0,005) |
| Aktives Metall | | Ti | Ti | Ti | Ti |
| OHZ | mgKOH/g | 15 | 15 | 16 | 15 |
| Viskosit ät (80°C) | Pa.s | 13,0 | 13,0 | 13,0 | 12,6 |
| GPC *M*ₙ. | g/mol | 8000 | 7000 | 7700 | 7400 |
| GPC *M*_{w} | g/mol | 23200 | 23300 | 23000 | 23000 |

| **Eigenschaften RHM (nach Reaktion mit MDI)** | | Beispiel 2e Beispiel 2f (erfindungsgemäß) gemäß) | | Beispiel 2g (erfindungsgemäß) | Beispiel 2h (erfindungs--gemäß) |
|---|---|---|---|---|---|
| Viskosit ät (130°C) | Pa.s | 47,0 | 42,0 | 27,5 | 38,5 |
| NCO-Gehalt | % | 2,0 | 2,1 | 2,2 | 1,8 |

Wie der Tabelle 2 entnommen werden kann, haben die untersuchten unterschiedlichen Katalysatoren keinen signifikanten Einfluss auf die Herstellung des Block-Copolymers bzgl. Molekulargewicht, Viskosität und OHZ (Beispiel 1a-h). Allerdings weisen die erfindungsgemäßen Titan enthaltenden RHM (Beispiele 2d-2h) eine deutlich niedrigere Viskosität auf als solche, die ein anderes Metall enthalten (Beispiele 2a-2c).

### Beispiel 3a-b: Herstellung von RHM-Formulierungen

In einen 500 ml Planschliffkolben wurden 150 g Block-Copolymer als Polyol und 150 g DYNACOLL 7360 gegeben und anschließend bei 130 °C für 45 Minuten im Vakuum vermengt und getrocknet. Danach wurde MDI in einem molaren OH/NCO-Verhältnis von 1:2,5 zugegeben und zügig homogenisiert. Zur vollständigen Umsetzung der Reaktionspartner wurde 45 Minuten bei 130 °C unter Schutzgasatmosphäre gerührt. Anschließend wurde der feuchtigkeitshärtende Schmelzklebstoff (RHM) bzgl. Viskosität und NCO-Gehalt analysiert und abgefüllt.

Die Ergebnisse der Ausprüfung der erhaltenen Zusammensetzungen (RHM) können den Tabellen 3 entnommen werden.

**Tabelle 3: Effekt des Katalysators in RHM-Abmischungen**

| Polyol | Beispiel 3a (Vergleich) | Beispiel 3b (Erfindungsgemäß) |
|---|---|---|
| Polyol Beispiel 1c | 150 g | |
| Polyol Beispiel 1e | | 150 g |
| DYNACOLL 7360 | 150 g | 150 g |
| Umsatz mit MDI - OH:NCO 1:2,5 | | |
| Eigenschaften RHM | | |
| Viskosität nach Herstellung | 16,9 Pa.s bei 130 °C | 11,2 Pa.s bei 130 °C |
| Viskosität nach 8h Lagerung bei 130 °C | 83 Pa.s bei 130 °C | 22 Pa.s bei 130 °C |
| Viskosität nach 24h Lagerung bei 130 °C | 151 Pa.s bei 130 °C | 55 Pa.s bei 130 °C |
| Viskositätsanstieg nach 24 h Lagerung bei 130 °C | 793% | 390 % |
| NCO-Gehalt nach RHM Herstellung | 2,4 Gew-% | 2,3 Gew-% |

Ergebnis: Es zeigt sich deutlich, dass auch in einer Abmischung mit weiteren Polyolen die erfindungsgemäßen Block-Copolymere enthaltend Titan als RHM eine deutlich verbesserte Viskosität nach RHM-Herstellung und insbesondere eine deutlich verbesserte Lagerstabilität bei temperierter Lagerung aufweisen.

## Patentansprüche

1. Zusammensetzung, enthaltend das Umsetzungsprodukt eines Block-Copolymers auf Basis von OH-funktionellen Polyolefinen und cyclischen Estern als Polyol, welches mindestens 1,8 OH-Gruppen aufweist, und mindestens einer Isocyanatverbindung, die mindestens zwei Isocyanatgruppen aufweist, **dadurch gekennzeichnet, dass** die Zusammensetzung mindestens 0,0001 bis 40 Gew.-% Titan aufweist und einen Gehalt an freien Isocyanatgruppen von mindestens 0,1 Gew.-% bezogen auf die Gesamtzusammensetzung aufweist.

2. Zusammensetzung nach Anspruch 1, **dadurch gekennzeichnet, dass** das Titan als organische Titan(IV)-verbindung, bevorzugt als Titan(IV)-alkoholat vorliegt.

3. Zusammensetzung nach Anspruch 1 oder 2, **dadurch gekennzeichnet, dass** das Block-Copolymer die Formel B'(OA'-H)_{w}- aufweist, mit B' = Polyolefinrest, w ≥ 1,8 und A' = Polyesterrest der Struktur (I), 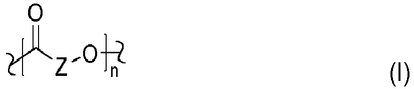 mit Z = gleiche oder verschiedene Kohlenwasserstoffreste, bevorzugt -C₅H₁₀- und/oder -C(CH₃)H- Rest, besonders bevorzugt -C₅H₁₀- Rest und n = 1-150.

4. Zusammensetzung nach Anspruch 3, **dadurch gekennzeichnet, dass** der Polyolefinrest B' ein Polybutadienrest enthaltend die oder vorzugsweise bestehend aus den von 1,3-Butadien abgeleiteten Monomereinheiten 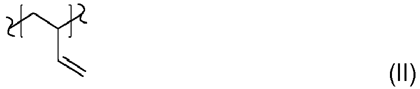 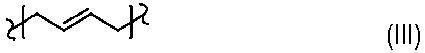 und 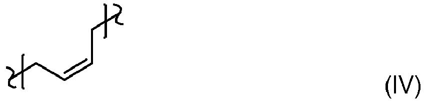 ist, mit der Maßgabe, dass die Monomereinheiten (II), (III) und (IV) blockweise oder statistisch verteilt angeordnet sein können und bezogen auf das Polybutadien der prozentuale Anteil der Wiederholungseinheit (II) = 10 bis 40 Molprozent beträgt, bezogen auf die Wiederholungseinheit (III) = 40 bis 85 Molprozent beträgt und der Anteil der Wiederholungseinheit (IV) 5 bis 40 Molprozent beträgt, wobei eine eckige Klammer bei der gewählten formelmäßigen Darstellung der im Polybutadien enthaltenen aus 1,3-Butadien abgeleiteten Monomereinheiten (II), (III) und (IV) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer Hydroxygruppe verbunden ist.

5. Zusammensetzung nach Anspruch 4, **dadurch gekennzeichnet, dass** im Polyolefinrest B' zusätzlich zu einem Anteil von bis zu 5 Molprozent bezogen auf das Polybutadien eine oder mehrere verzweigende Struktur/en der Formeln (V), (VI) oder (VII) 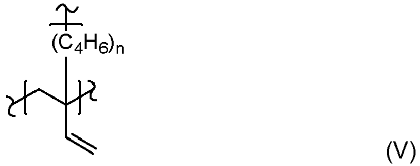 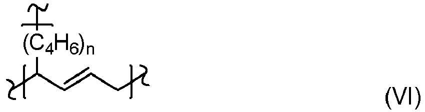 und/oder 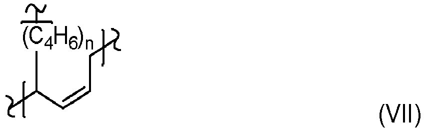 vorhanden sind, wobei "(C₄H₆)ₙ" einer Butadien-Oligomer enthaltend die oder vorzugsweise bestehend aus den Wiederholungseinheiten (II), (III) und (IV) entspricht.

6. Zusammensetzung nach einem der vorangegangenen Ansprüche, **dadurch gekennzeichnet, dass** die Isocyanatverbindung 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat oder Mischungen daraus, bevorzugt 4,4'-Diphenylmethandiisocyanat oder eine Mischung aus 4,4'-Diphenylmethandiisocyanat und 2,4'-Diphenylmethandiisocyanat ist.

7. Zusammensetzung nach einem der vorangegangenen Ansprüche, **dadurch gekennzeichnet, dass** es sich um einkomponentige oder zweikomponentige, feuchtigkeits- oder thermisch vernetzende Polyurethanklebstoffe handelt.

8. Verfahren zur Herstellung eines Umsetzungsprodukts eines Block-Copolymers auf Basis von OH-funktionellen Polyolefins, welches auch anteilig oder vollständig hydriert vorliegen kann, und eines zyklischen Esters als Polyol, welches mindestens 1,8 OH-Gruppen aufweist, und mindestens einer Isocyanatverbindung, die mindestens zwei Isocyanatgruppen aufweist, **dadurch gekennzeichnet, dass** die Umsetzung in Gegenwart eines Titan aufweisen Katalysators erfolgt und so viel Isocyanatverbindung eingesetzt wird, dass das Verhältnis von OH-Gruppen zu Isocyanat-Gruppen von 1 zu 1,1 bis 1 zu 5 beträgt.

9. Verfahren nach Anspruch 8, **dadurch gekennzeichnet, dass** als Hydroxy-funktionelles Polyolefin ein Polybutadien enthaltend die oder vorzugsweise bestehend aus den von 1,3-Butadien abgeleiteten Monomereinheiten 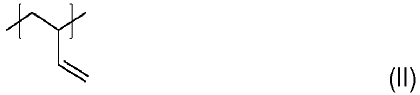 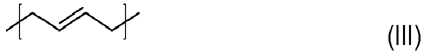 und 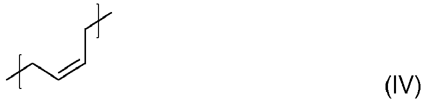 ist, mit der Maßgabe, dass die Monomereinheiten (II), (III) und (IV) blockweise oder statistisch verteilt angeordnet sein können und bezogen auf das Polybutadien der prozentuale Anteil der Wiederholungseinheit (II) = 10 bis 40 Molprozent beträgt, bezogen auf die Wiederholungseinheit (III) = 40 bis 85 Molprozent beträgt und der Anteil der Wiederholungseinheit (IV) 5 bis 40 Molprozent beträgt, wobei eine eckige Klammer bei der gewählten formelmäßigen Darstellung der im Polybutadien enthaltenen aus 1,3-Butadien abgeleiteten Monomereinheiten (II), (III) und (IV) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer Hydroxygruppe verbunden ist, und optional zusätzlich zu einem Anteil von bis zu 5 Molprozent bezogen auf das Polybutadien eine oder mehrere verzweigende Struktur/en 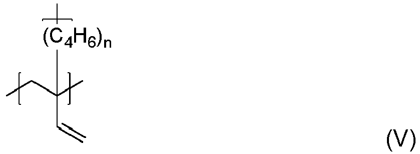 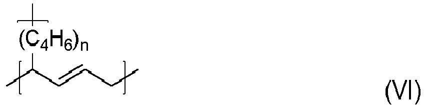 und/oder 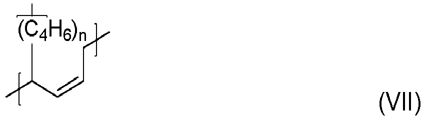 vorhanden sind, wobei "(C₄H₆)ₙ" einem Butadien-Oligomer enthaltend die oder vorzugsweise bestehend aus den Wiederholungseinheiten (II), (III) und (IV) entspricht und die jeweiligen Kettenenden OH-Gruppen sind.

10. Verfahren nach Anspruch 8 oder 9, **dadurch gekennzeichnet, dass** als zyklischer Ester ε-Caprolacton und zusätzlich gegebenenfalls Lactid eingesetzt wird.

11. Verfahren nach einem der Ansprüche 8 bis 10, **dadurch gekennzeichnet, dass** als Titan aufweisender Katalysator eine organische Titan-(IV)-Verbindung, bevorzugt ein Titan-(IV)-Alkoholat eingesetzt wird.

12. Verfahren nach einem der Ansprüche 8 bis 11, **dadurch gekennzeichnet, dass** als Isocyanatverbindung 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat oder Mischungen daraus, bevorzugt 4,4'-Diphenylmethandiisocyanat oder eine Mischung aus 4,4'-Diphenylmethandiisocyanat und 2,4'-Diphenylmethandiisocyanat eingesetzt wird.

13. Verfahren nach mindestens nach einem der Ansprüche 8 bis 12, **dadurch gekennzeichnet, dass** Zusammensetzungen nach einem der Ansprüche 1 bis 7 hergestellt werden.

14. Verwendung von Zusammensetzungen nach einem der Ansprüche 1 bis 7 zur Verklebung von Substraten.

15. Verwendung gemäß Anspruch 14, **dadurch gekennzeichnet dass** es sich bei den Substraten um ölige Substrate handelt.
